Europäisches Patentamt

European Patent Office

Office européen des brevets

(11) Veröffentlichungsnummer: **0 473 895 A1**

# EUROPÄISCHE PATENTANMELDUNG

(21) Anmeldenummer: **91110733.2**

(22) Anmeldetag: **28.06.91**

(51) Int. Cl.⁵: **G01B 5/00**

(30) Priorität: **05.09.90 DE 4028076**

(43) Veröffentlichungstag der Anmeldung:
**11.03.92 Patentblatt 92/11**

(84) Benannte Vertragsstaaten:
**CH DE FR GB IT LI SE**

(71) Anmelder: **DR.-ING. HÖFLER MESSGERÄTEBAU GMBH**
**Im Stöck 2**
**W-7505 Ettlingen(DE)**

(72) Erfinder: **Bertz, Hans-Ulrich**
**Ortenauer Weg 4**
**W - 7554 Kuppenheim(DE)**
Erfinder: **Meder, Willi**
**Blauenstr. 14**
**W - 7505 Ettlingen-Bruchhausen(DE)**

(74) Vertreter: **Lemcke, Rupert, Dipl.-Ing. et al**
**Patentanwälte Dipl.-Ing. R. Lemcke Dr.-Ing.**
**H.J. Brommer Bismarckstrasse 16 Postfach 4026**
**W-7500 Karlsruhe 1(DE)**

(54) **Messeinrichtung für rotationssymmetrische Werkstücke.**

(57) Es wird für eine Meßeinrichtung für rotationssymmetrische Werkstücke mit einer verstellbaren Spannvorrichtung, die das Werkstück trägt, und mit einem verfahrbaren Meßschlitten, der wenigstens ein das Werkstück mit einem Taststift in radialer und/oder axialer Richtung vermessenden Meßkopf trägt, angegeben, wie der Nachteil vermieden wird, daß bei einer Änderung der Meßaufgabe ein anderer, an die neue Meßaufgabe angepaßter Taststift aufwendig umgerüstet werden muß. Dazu ist der Meßkopf mit einem Taststiftträger ausgerüstet, der mehrere Taststifte trägt und verdrehbar ist. So können die Taststifte schnell in die Meßposition gedreht werden. Dort werden sie durch eine Rasteinrichtung festgehalten.

Fig. 3

Die Erfindung betrifft eine Meßeinrichtung für rotationssymmetrische Werkstücke mit in axialer Richtung des Werkstückes verlaufenden Längsführungen, auf denen eine entlang der Längsführungen verstellbare Spannvorrichtung das Werkstück trägt und auf denen ein Meßschlitten verfahrbar ist, der wenigstens einen das Werkstück mit einem Taststift in radialer und/oder axialer Richtung vermessenden Meßkopf trägt, wobei der Meßkopf quer zu den Längsführungen auf dem Meßschlitten verfahrbar ist und wobei der Taststift über ein Federelement derart an den Meßkopf angekoppelt ist, daß er mindestens in bezüglich des Werkstücks radialer Richtung aus einer Grundposition herausbewegbar ist, wobei am gefederten Teil mindestens ein Meßwertgeber befestigt ist, mit dem die Positionsveränderung des Taststiftes erfaßbar ist.

Meßeinrichtungen dieser Art sind bekannt. Bei ihnen werden die Werkstücke entweder durch ein Spannprisma starr gehalten oder sie sind zwischen Reitstöcken mit verstellbaren Pinolen drehbar gelagert.

Diese Einrichtungen haben den wesentlichen Nachteil, daß bei einer Änderung der Meßaufgabe unter teilweise erheblichem manuellen Aufwand ein anderer Taststift oder Meßkopf montiert werden muß. Dadurch wird eine Vermessung eines Werkstückes bezüglich mehrerer Meßgrößen sehr umständlich und zeitaufwendig.

Aufgabe der Erfindung ist es von daher, eine Meßeinrichtung anzugeben, mit der ein schneller Wechsel verschiedener Meßtaster möglich ist, die für verschiedene Meßaufgaben optimal geeignet sind.

Dabei soll der Wechsel zwischen den einzelnen Meßtastern schnell und ohne hohen Montageaufwand möglich sein, außerdem soll sie einfach zu bedienen und kostengünstig sein.

Die Aufgabe wird erfindungsgemäß dadurch gelöst, daß der Taststift in einem Taststiftträger mit mindestens zwei Taststiften angeordnet ist, daß der Taststiftträger um eine zur Werkstückachse parallele Achse oder in einer Ebene, die die Werkstückachse enthält, verdrehbar angeordnet ist, und daß der Taststiftträger jeweils in einer den einzelnen Taststiften zugeordneten Drehposition einrastbar ist.

Die Erfindung hat den Vorteil, daß ein Meßkopf für mehrere Meßaufgaben geeignet ist, so daß eine kostenintensive Bevorratung unterschiedlichster Meßköpfe entfällt. Durch die erfindungsgemäße Ausgestaltung eines solchen Meßkopfes muß bei einer anderen Meßaufgabe kein anderer Meßkopf an der Meßeinrichtung montiert werden, sondern es genügt, den Taststiftträger zu verdrehen, so daß ein geeigneter Taststift in die Meßposition gebracht wird. Indem der Taststiftträger in einzelne Taststiften zugeordneten Drehpositionen einrastbar ist, wird eine hohe Bedienungsfreundlichkeit erreicht, da eine zeitaufwendige Justierung der Drehposition entfällt, wie sie bei einer im übrigen aber gleichermaßen anwendbaren elektrischen Positioniereinrichtung auftreten würde.

Um die Flexibilität der Meßeinrichtung weiter zu erhöhen, ist es vorteilhaft, den Taststiftträger auswechselbar mit dem Meßkopf zu verbinden.

Wenn dabei der Taststiftträger mit einer Spanneinrichtung an einem Drehkörper befestigt wird, der verdrehbar im Meßkopf gelagert ist, so wird hierdurch vermieden, daß beim Auswechseln des Taststiftträgers die für seine Verdrehung benötigten hochpräzisen, spielfreien Lagerungen gelöst werden müssen. Die Befestigung des Taststiftträgers am Drehkörper muß in diesem Zusammenhang als weniger kritisch angesehen werden.

Die Spanneinrichtung, mit der der Taststiftträger am Drehkörper befestigt wird, kann beispielsweise eine Spannschraube oder ein Spannhebel sein. Es ist aber auch denkbar, am Drehkörper einen Motor mit einer Spindel vorzusehen, die den Taststiftträger über ein Gewinde mit dem Drehkörper verbindet. Andererseits kann auch ein Elektro- oder Permanentmagnet oder eine pneumatische Ansaugvorrichtung in den Drehkörper integriert sein, mit denen die Verbindung zwischen Taststiftträger und Drehkörper bewirkt wird.

Bei all diesen Spanneinrichtungen ist es günstig, wenn der Drehkörper eine Lagerung, insbesondere ein Dreipunktlager aufweist, die die Lage des befestigten Taststiftträgers zum Drehkörper eindeutig bestimmt. Bei einer bevorzugten Ausführungsform wird dieses Dreipunktlager durch drei Zylinderkörperpaare am Drehkörper und drei mit diesen korrespondierenden Kugelkalotten am Taststiftträger gebildet. Um dabei die Winkelstellung exakt zu definieren, weist der Taststiftträger dabei einen Kennstift auf, der in eine entsprechende Bohrung am Drehkörper greift.

Um die festgelegte Drehposition des Taststiftträgers ohne großen Zeitaufwand verändern zu können, ist es günstig, wenn die diese Drehposition festlegende Rastvorrichtung lösbar ist.

Bei einer bevorzugten Ausführungsform weist die Rastvorrichtung dazu einen schwenkbaren Rasthebel auf, an dem eine durch zwei Zylinderkörper gebildete, zur Drehachse des Taststiftträgers parallele Nut ist, die mit einer Kugelkalotte am drehbaren Teil, das heißt dem Taststiftträger oder dem Drehkörper, korrespondiert, wobei das drehbare Teil weitere, einzelnen Taststiften zugeordnete Kugelkalotten am Umfang aufweist. Um das dieser Art auf die Achse des Taststiftträgers bzw. des Drehkörpers aufgebrachte Kippmoment auszugleichen, kann die Rastvorrichtung mindestens zwei bezüglich des Taststiftträgers bzw. des Drehkörpers im wesentlichen einander gegenüberliegend angeordnete Bauteile aufweisen.

Bei der bevorzugten Ausführungsform weist die Rastvorrichtung dazu einen weiteren Hebel ohne Nut auf, der dem Rasthebel im wesentlichen diametral gegenüberliegt und mit einer anderen Kugelkalotte in Anlage ist, die am drehbaren Teil der ersten Kugelkalotte im wesentlichen diametral gegenüberliegt. Die so auf das drehbare Teil aufgebrachten Radialkräfte heben sich gegenseitig auf, so daß kein resultierendes Moment an der Drehachse auftritt.

Da der Taststift gegenüber dem Werkstück federnd gelagert sein soll, ist bei einer bevorzugten Ausführungsform das hierfür vorgesehene Federelement mindestens ein paralleles Blattfederpaar, das an seinem einen Ende am Meßkopf befestigt ist und das an seinem freien Ende elastisch zum Meßkopf einen Aufnahmekörper trägt, an dem der Taststiftträger drehbar gelagert ist.

Dieses Blattfederpaar bewirkt, daß der Taststift nur in einer Richtung federnd ausgelenkt werden kann. Falls der Taststift in eine weitere Richtung federnd ausgelenkt werden soll, so ist die Lagerung des genannten Blattfederpaares in einem Zwischenglied vorzusehen, das über ein zweites Blattfederpaar in der weiteren Auslenkrichtung federn kann. Über ein drittes Blattfederpaar kann auch eine kardanische Aufhängung des Taststiftes erfolgen.

Die federnde Lagerung des Aufnahmekörpers ermöglicht es, die Federung der Taststifte einfach zu erreichen, da nicht jeder Taststift separat federnd gelagert werden muß.

Eine Auslenkung des Taststiftes am Werkstück bewirkt eine zu messende Größe. Um diese einfach erfassen zu können, ist es günstig, wenn das Meßelement mindestens ein induktiver Wegaufnehmer ist, der das gefederte Element und den Meßkopf in Richtung des Federweges verbindet.

Bei der oben beschriebenen Lagerung mit mehreren Blattfederpaaren, ist entsprechend für jede Federrichtung ein separater Wegaufnehmer vorzusehen.

Außer einem induktiven Wegaufnehmer ist es auch im Rahmen der Erfindung möglich, inkrementale Meßsysteme zu verwenden oder die Blattfedern mit Dehnungsmeßstreifen (DMS) zu versehen und mit diesen die Auslenkung des Taststiftes zu ermitteln.

Um die Vermessung eines Werkstückes weitgehend automatisieren zu können, ist es vorteilhaft, wenn der Taststiftträger durch einen Motor verdrehbar ist. Um dabei eine exakte Verdrehung zu erreichen, kann der Taststiftträger und der Motor mit einem Winkelkodierer am Taststiftträger und einem Tachogenerator am Motor in einem Regelkreis verbunden sein.

Einerseits ist es zwar möglich, den Motor direkt auf der Welle des Taststiftträgers oder des Drehkörpers zu befestigen, aber dadurch wird die träge Masse des gefederten Teiles stark erhöht. Von daher ist es vorteilhaft, wenn der Motor auf seiner Abtriebswelle ein Rad aufweist, das über einen mit dem Taststiftträger drehfest koaxial verbundenen Drehkranz die Drehbewegung des Taststiftträgers bewirkt. Da hierbei eine Drehzahl und Drehwinkeluntersetzung erfolgen kann, kann ein preiswerterer Motor verwandt werden.

Bei einer bevorzugten Ausführungsform ist der Motor starr am Meßkopf befestigt und der Drehkranz des Taststiftträgers wird durch Auslenken des federnd gelagerten Aufnahmekörpers, in dem der Taststiftträger gelagert ist, in Wirkverbindung mit dem Rad am Motor gebracht. Die Auslenkung des Aufnahmekörpers kann besonders einfach durch eine am Meßkopf befestigte Stellvorrichtung erfolgen, wobei sich der konstruktive Freiraum ergibt, die Stellvorrichtung an jeder beliebigen Stelle im Meßkopf zu befestigen, wenn sie den Aufnahmekörper über einen drehbar am Meßkopf gelagerten Kipphebel auslenkt.

Weitere Merkmale und Vorteile der Erfindung ergeben sich aus der nachfolgenden Beschreibung der Zeichnung. Dabei zeigt

Fig. 1    Gesamtansicht der Meßeinrichtung
Fig. 2    Meßschlitten mit zwei Meßköpfen
Fig. 3    Schnitt durch einen erfindungsgemäßen Meßkopf
Fig. 4    Schnitt durch Fig. 3 gemäß der Linie IV-IV
Fig. 5    Schnitt durch Fig. 3 gemäß der Linie V-V

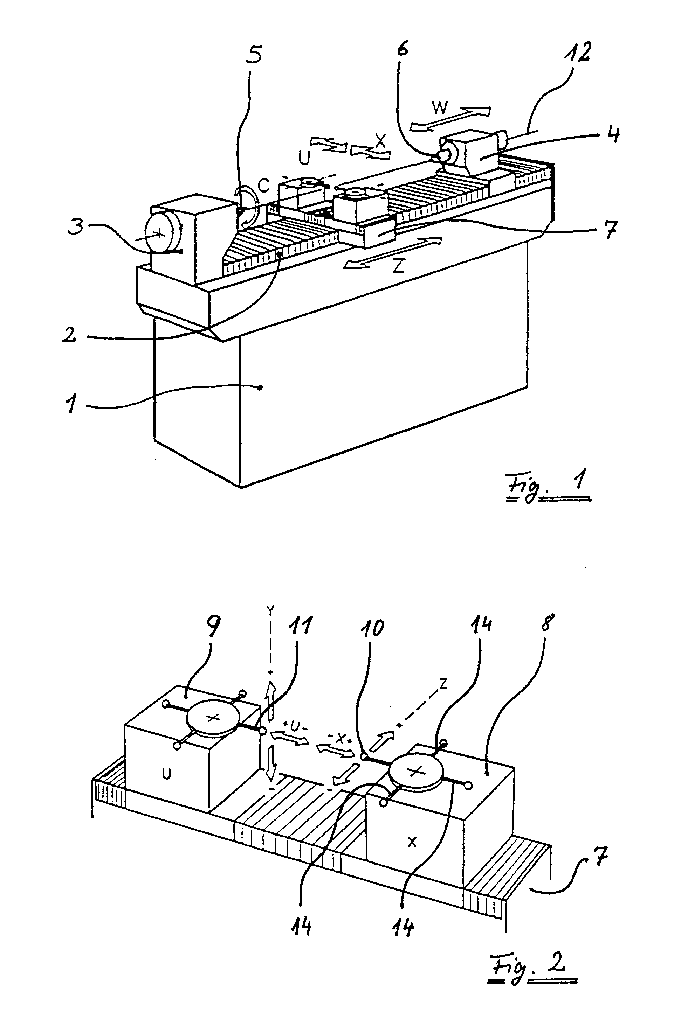

Fig. 1 zeigt die Gesamtansicht einer erfindungsgemäßen Meßvorrichtung. Auf einem Gestell 1 sitzen auf einer abgedeckten Längsführung 2 zwei Reitstöcke 3, 4, wobei der eine (3) feststeht und der andere (4) auf der Längsführung 2 mit der Koordinate W verfahrbar ist. Zwischen den Pinolen 5, 6 der Reitstöcke 3, 4 kann ein Werkstück drehbar eingespannt werden (siehe Pfeil C).

Gleichermaßen kann aber auch eine fliegende Lagerung des Werkstückes an einem der Reitstöcke vorgesehen sein.

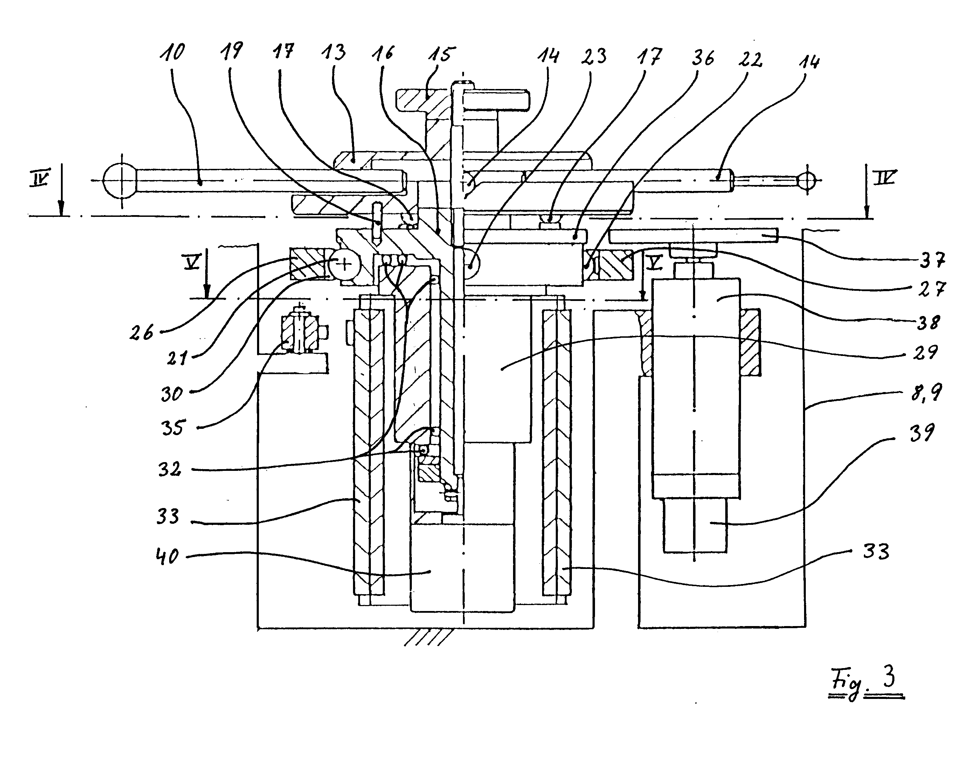

Zwischen den Reitstöcken 3, 4 kann ein Meßschlitten 7 am zwischen den Pinolen 5, 6 eingespannten Werkstück entlang der Koordinate Z verfahren. Die in Fig. 2 näher dargestellte Querführung 7 trägt zwei Meßköpfe 8, 9, die entlang der Koordinaten U, X auf dem Meßschlitten 7 unabhängig voneinander verfahren werden können.

Dabei tasten die Meßköpfe mit ihren Taststiften 10, 11 die Kontur eines Werkstückes ab, das zwischen den Pinolen 5, 6 der Reitstöcke 3, 4 eingespannt ist.

Aus Abweichungen der Taststifte 10, 11 in der U- oder X-Richtung wird der Durchmesser des Werkstückes bestimmt und ob dieser außermittig zur Werkstücklängsachse 12 liegt bzw. wie groß der Rundlauffehler bei sich drehendem Werkstück ist.

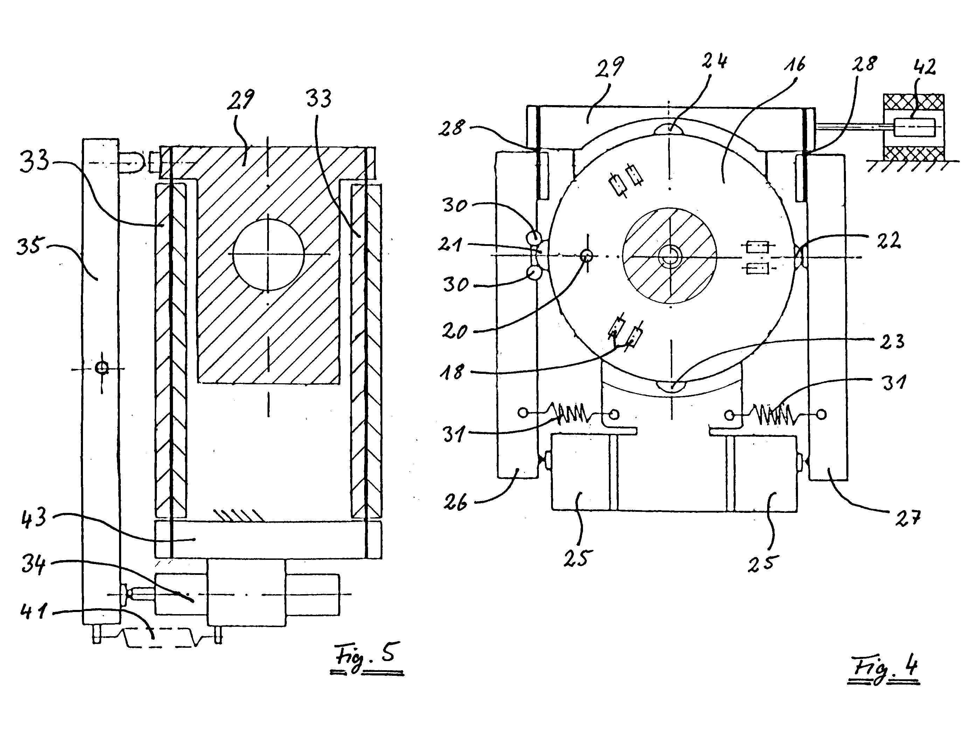

In Fig. 3 ist der Aufbau eines Meßkopfes genauer dargestellt.

Der Taststift 10 ist in einem Taststiftträger 13 befestigt, der noch weitere Taststifte 14 aufweist. Im dargestellten Beispiel sind vier Taststifte in den Taststiftträger 13 montiert, es können aber auch entsprechend mehr oder weniger sein.

Der Taststiftträger 13 ist mit einer Spannschraube 15 auf einen Drehkörper 16 gespannt.

Damit die relative Lage zwischen Taststiftträger und Drehkörper eindeutig bestimmt ist, sind in die Unterseite des Taststiftträgers 13 drei Kugelkalotten 17 integriert.

Beim Auflegen des Taststiftträgers 13 auf den Drehkörper 16 legen sich die Kugelkalotten 17 in durch Zylinderpaare 18 gebildete Nuten am Drehkörper 16. Um die Winkelposition des Taststiftträgers zum Drehkörper eindeutig festzulegen, weist der Taststiftträger 13 einen Kennstift 19 auf, der in eine Kennbohrung 20 des Drehkörpers 16 eingreift.

Der Drehkörper 16 weist an seinem Umfang mehrere Kugelkalotten 21 bis 24 auf, die benötigt werden, um den Drehkörper 16 in entsprechenden Drehpositionen festzulegen.

In Fig. 4 ist die Rastvorrichtung genauer dargestellt: Um die Rastvorrichtung zu lösen, werden die Kurzhubzylinder 25 ausgefahren, wodurch der Rasthebel 26 und ein weiterer Hebel 27 um ihre Befestigungspunkte 28 am Aufnahmekörper 29 nach außen schwenken. Dabei geben zwei Zylinderkörper 30, die mit ihren Achsen parallel zur Drehachse des Drehkörpers 16 liegen und so eine Nut bilden, die Kugelkalotte 21 frei, so daß der Drehkörper 16 mit dem auf ihm sitzenden Taststiftträger 13 dann verdreht werden kann.

In der gewünschten Endposition des Taststiftträgers bzw. des Drehkörpers werden die Kurzhubzylinder 25 wieder eingefahren, wodurch der Rasthebel 26 und der gegenüberliegende andere Hebel 27 über zwei Rückholfedern 31 wieder nach innen geschwenkt werden und die durch die Zylinderkörper 30 gebildete Nut mit einer anderen Kugelkalotte in Eingriff kommt und so die Drehposition des Drehkörpers 16 exakt bestimmt. Durch den Rasthebel 26 wird auf den Drehkörper 16 eine Radialkraft ausgeübt, die zu einem Kippmoment um die Drehachse des Drehkörpers 16 führen kann. Um diese Radialkraft auszugleichen, drückt der andere Hebel 27 mit gleicher Kraft über die Kugelkalotte 22 auf den Drehkörper 16, da so alle Radialkräfte kompensiert werden.

Der Drehkörper 16 ist drehbar über Kugellager 32 in einem Aufnahmekörper 29 gelagert.

Dieser Aufnahmekörper 29 ist wie in Fig. 5 dargestellt über zwei parallele Blattfedern 33 mit dem starr am Meßkopf 8, 9 befestigten Träger 43 verbunden. Über dieses Blattfederparallelogramm (33) ist der Aufnahmekörper 29 und damit der an ihm gelagerte Drehkörper 16 mit Rasteinrichtungen 25, 26, 27, 30, 31 und der auf dem Drehkörper 16 montierte Taststiftträger 13 mit den Taststiften 10, 11 federnd gegen den Meßkopf 8, 9 abgestützt.

In dem dargestellten Beispiel arbeitet die federnde Abstützung nur in einer, nämlich der radialen Richtung. Sollen die Taststifte 10, 11 auch in axialer Richtung gegen den Meßkopf 8, 9 federnd abgestützt sein, so wird der Träger 43 nicht starr am Meßkopf 8, 9 befestigt, sondern er wird über ein weiteres Blattfederparallelogramm mit dem Meßkopf 8, 9 verbunden. Dabei verlaufen die Blattfedern dieses weiteren Blattfederparallelogramms genau quer zu den dargestellten Blattfedern 33.

Der Taststiftträger wird nun wie folgt verdreht: Die Kurzhubzylinder 25 fahren aus. Damit schwenken die Hebel 26, 27 nach außen und geben die eingerastete Kugelkalotte 21 am Drehkörper 16 frei. Danach fährt ein Pneumatikzylinder 34, der an dem Meßkopf 8, 9 befestigt ist, aus und drückt über einen am Meßkopf befestigten Kipphebel 35 den über die Blattfedern 33 federnd gelagerten Aufnahmekörper 29 mitsamt dem am Aufnahmekörper 29 gelagerten Drehkörper 16 zur Seite. Dadurch kommt der Drehkörper 16 mit einem Reibkranz 36 in Kraftschluß mit einem Reibrad 37, das auf einem starr im Meßkopf 8, 9 befestigten Motor 38 sitzt.

Der Motor 38 mit Tachogenerator 39 wird in Verbindung mit einer Positioniersteuerung und dem Winkelkodierer 40 gesteuert. Wenn der Motor 38 über das Reibrad 37 und den Reibkranz 36 den Drehkörper 16 mit dem auf ihm montierten Taststiftträger 13 in die gewünschte Position verdreht hat, fährt der Pneumatikzylinder 34 wieder ein, wodurch der Kipphebel 35 von der Rückholfeder 41 gezogen wieder zurückschwenkt und der Aufnahmekörper 29 mit dem Drehkörper 16 federt in die Ausgangslage zurück, wodurch Drehkörper und Motor wieder voneinander getrennt werden.

Gleichzeitig fahren die Kurzhubzylinder 25 wieder ein, wodurch die Hebel 26 und 27 durch die Rückholfedern 31 wieder zurückschwenken. Dabei verriegeln die Zylinderkörper 30 die Drehposition des Drehkörpers 16. Gleichzeitig wird aber auch der Hebel 27 gegen die Kugelkalotte 22 gedrückt, so daß der Drehkörper 16 momentenfrei im Aufnahmekörper 29 sitzt.

Die Aufnahme eines Meßwertes erfolgt über einen induktiven Wegaufnehmer 42. Bei einer Auslenkung des Taststiftes 10 gegenüber dem Meßkopf 8, 9 wird der Taststiftträger 13 und über diesen der Drehkörper 16 ausgelenkt, der seine Auslenkung wiederum direkt auf den Aufnahmekörper 29 überträgt.

Diese Auslenkung des Aufnahmekörpers 29 wird über den Wegaufnehmer 42 gemessen und entsprechend ausgewertet.

**Patentansprüche**

1. Meßeinrichtung für rotationssymmetrische Werkstücke mit in axialer Richtung des Werkstückes verlaufenden Längsführungen, auf denen eine entlang der Längsführungen verstellbare Spannvorrichtung das Werkstück trägt und auf denen ein Meßschlitten verfahrbar ist, der wenigstens einen das Werkstück mit einem Taststift in radialer und/oder axialer Richtung vermessenden Meßkopf trägt, wobei der Meßkopf quer zu den Längsführungen auf dem Meßschlitten verfahrbar ist und wobei der Taststift über ein Federelement derart an den Meßkopf angekoppelt ist, daß er mindestens in bezüglich des Werkstücks radialer Richtung aus einer Grundposition herausbewegbar ist, wobei am gefederten Teil mindestens ein Meßwertgeber befestigt ist, mit dem die Positionsveränderung des Taststiftes erfaßbar ist, dadurch gekennzeichnet, daß der Taststift (10, 11, 14) in einem Taststiftträger (13) mit mindestens zwei Taststiften angeordnet ist, daß der Taststiftträger um eine zur Werkstückachse (12) parallele Achse oder in einer Ebene, die die Werkstückachse enthält, verdrehbar angeordnet ist und daß der Taststiftträger jeweils in einer den einzelnen Taststiften zugeordneten Drehposition einrastbar ist.

2. Einrichtung gemäß Anspruch 1, dadurch gekennzeichnet, daß der Taststiftträger (13) auswechselbar mit dem Meßkopf (8, 9) verbunden ist.

3. Einrichtung gemäß Anspruch 2, dadurch gekennzeichnet, daß der Taststiftträger (13) mit einer Spanneinrichtung (15) an einem Drehkörper (16) befestigt ist, der verdrehbar im Meßkopf (8, 9) gelagert ist.

4. Einrichtung gemäß Anspruch 3, dadurch gekennzeichnet, daß der Drehkörper (16) eine Lagerung, insbesondere ein Dreipunktlager (17, 18) aufweist, die die Lage des befestigten Taststiftträgers (13) zum Drehkörper eindeutig bestimmt.

5. Einrichtung gemäß Anspruch 1, dadurch gekennzeichnet, daß die Rastvorrichtung (21 - 24, 30), die die Drehposition des Taststiftträgers (13) festlegt, lösbar ist.

6. Einrichtung gemäß Anspruch 5, dadurch gekennzeichnet, daß die Rastvorrichtung (21 - 24, 30) mindestens zwei bezüglich des Taststiftträgers im wesentlichen einander gegenüberliegend angeordnete Bauteile (26, 27) aufweist.

7. Einrichtung gemäß Anspruch 5, dadurch gekennzeichnet, daß die Rastvorrichtung einen schwenkbaren Rasthebel (26) mit einer durch zwei Zylinderkörper (30) gebildeten, zur Drehachse des Taststiftträgers (13) parallelen Nut und einer mit dieser Nut korrespondierenden Kugelkalotte (21) am drehbaren Teil (16) aufweist, wobei das drehbare Teil weitere einzelnen Taststiften zugeordnete Kugelkalotten (22 - 24) am Umfang aufweist.

8. Einrichtung nach Anspruch 6 und 7, dadurch gekennzeichnet, daß die Rastvorrichtung einen weiteren Hebel (27) ohne Nut aufweist, der dem Rasthebel (26) im wesentlichen diametral gegenüberliegt und mit einer anderen Kugelkalotte (22) in Anlage ist, die am drehbaren Teil (16) der ersten Kugelkalotte (21) im wesentlichen diametral gegenüberliegt.

9. Einrichtung nach Anspruch 1, dadurch gekennzeichnet, daß das Federelement mindestens ein paralleles Blattfederpaar (33) ist, das an seinem einen Ende am Meßkopf (8, 9) befestigt ist und das an seinem freien Ende elastisch zum Meßkopf einen Aufnahmekörper (29) trägt, an dem der Taststiftträger (13) drehbar gelagert ist.

10. Einrichtung gemäß Anspruch 1, dadurch gekennzeichnet, daß das Meßelement mindestens ein induktiver Wegaufnehmer (42) ist, der das gefederte Teil (29) und den Meßkopf (8, 9) in Richtung des Federweges verbindet.

11. Einrichtung gemäß Anspruch 1, dadurch gekennzeichnet, daß der Taststiftträger (13) durch einen Motor (38) verdrehbar ist.

12. Einrichtung gemäß Anspruch 11, dadurch gekennzeichnet, daß der Taststiftträger (13) und der Motor (38) mit einem Winkelkodierer (40) am Taststiftträger (13) und einem Tachogenerator (39) am Motor in einem Regelkreis verbunden sind.

13. Einrichtung gemäß Anspruch 11,
dadurch gekennzeichnet,
daß der Motor (38) auf seiner Abtriebswelle ein Rad (37) aufweist, das über einen mit dem Taststiftträger (13) drehsteif koaxial verbundenen Drehkranz (36) die Drehbewegung des Taststiftträgers bewirkt.

14. Einrichtung gemäß Anspruch 9 und 13,
dadurch gekennzeichnet,
daß der Motor (38) starr am Meßkopf (8, 9) befestigt ist und daß durch Auslenken des federnd gelagerten Aufnahmekörpers (29), in dem der Taststiftträger (13) gelagert ist, der Drehkranz (36) des Taststiftträgers in Wirkverbindung mit dem Rad (37) am Motor bringbar ist.

15. Einrichtung gemäß Anspruch 14,
dadurch gekennzeichnet,
daß die Auslenkung des Aufnahmekörpers (29) durch einen starr am Meßkopf (8, 9) befestigtes Stellglied (34) erfolgt, das über einen drehbar am Meßkopf gelagerten Kipphebel (35) den Aufnahmekörper auslenkt.

Fig. 1

Fig. 2

EP 0 473 895 A1

Fig. 3

8

Fig. 4

Fig. 5

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 157 176 (FINIKE ITALIANA MARPOSS S.P.A.)<br>* Ansprüche 1-9 *<br>– – – | 1-6 | G 01 B 5/00 |
| Y | EP-A-0 243 766 (RENISHAW PLC)<br>* Spalten 3-10 *<br>– – – | 1-6 | |
| A | DE-A-3 542 255 (METABOWERKE GMBH & CO.)<br>* Spalten 4-8 *<br>– – – | 1 | |
| A | DE-A-3 640 287 (FA. CARL ZEISS)<br>* Spalten 3-5 *<br>– – – | 1-15 | |
| A | ZWF - ZEITSCHRIFT FÜR WIRTSCHAFTLICHE FERTI-GUNG<br>& AUTOMATISIERUNG Band 82, Nr. 9, September 1987,<br>Seiten 154-158, München, DE; P. JENZER: "Der Messrobo-ter zur Steuerung der flexiblen Fertigung"<br>* Seite 156 *<br>– – – – – | 1-6 | |

| RECHERCHIERTE SACHGEBIETE (Int. Cl.5) |
|---|
| B 23 B 7/00<br>B 23 Q 1/00<br>B 23 Q 7/00<br>G 01 B 5/00<br>G 01 B 7/00<br>G 01 B 21/00 |

Der vorliegende Recherchenbericht wurde für alle Patentansprüche erstellt

| Recherchenort | Abschlußdatum der Recherche | Prüfer |
|---|---|---|
| Berlin | 27 November 91 | DIETRICH A. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument